# EUROPEAN PATENT SPECIFICATION

(11) **EP 1 781 086 B1**
(45) Date of publication and mention of the grant of the patent: **16.07.2008**
(21) Application number: 05758525.9
(22) Date of filing: 17.06.2005
(51) Int. Cl.: A01K 11/00

(54) **SYSTEM FOR MARKING A BIOLOGICAL OBJECT AND FOR TAKING A SAMPLE OF THE BIOLOGICAL OBJECT**
SYSTEM ZUM MARKIEREN EINES BIOLOGISCHEN OBJEKTS UND FÜR DIE PROBENAHME AUS DEM BIOLOGISCHEN OBJEKT
SYSTEME PERMETTANT DE MARQUER UN OBJET BIOLOGIQUE ET DE PRELEVER UN ECHANTILLON DE L'OBJET BIOLOGIQUE

(30) Priority: 29.06.2004 NL 1026522; 10.12.2004 NL 1027712
(43) Date of publication of application: 09.05.2007
(73) Proprietor: Nehls, Reinhard, 46399 Bocholt (DE)
(72) Inventor: CAISLEY, Roy, 46419 Isselburg-Vehlingen (DE)
(74) Representative: Brookhuis, Hendrik Jan Arnold
(86) International application number: PCT/IB2005/001698
(87) International publication number: WO 2006/000869

(56) References cited:
- WO-A-02/078431
- WO-A2-02/39810
- WO-A2-02/052928
- FR-A1- 2 831 389
- US-B2- 6 509 187

## Description

The invention relates to marking of a biological object and taking a sample of the biological object.

In particular, the invention relates to marking and sampling of animals, especially for reliable identification of each individual animal.

In the past few years, the desire and need to reliably identify individual animals has been increasing further. Particularly if the animals' meat is intended for human consumption or if the animals are going to be part of the human consumption chain in some other way, there is a great need for reliable identification. One example is the BSE problem, where the accurate determination of the origin and the life history of the animals is of great importance. However, the reliable identification of animals also plays a part if the animal involved is not to be consumed, but is a pet, (race) horse, or the like. However, the invention also relates to the marking and sampling of other biological objects, such as plants.

The invention relates to a system which not only provides for an ear tag to be attached to the animal, but also more or less simultaneously taking a sample of biological material from the animal. The sample of biological material is then intended in particular for the identification of the animal based on the "genetic fingerprint" which can be determined using the sample taken. Of course, the sample can also be used for other purposes.

Such systems are known, inter alia, from WO 02/39810 and US 6,509,187.

With known systems of this type, there is a risk that no sample material will end up in the sample container when the tag is being attached. As it is conceivable that such sample containers containing samples will not be analyzed immediately, but will be stored for a prolonged period of time, and if appropriate only "problematic cases" are analyzed, there is a risk that the fact that no sample has been taken will only be discovered at a late stage. This could, for example, be not until a long time after the animal in question has been slaughtered, which means that no new sample can be taken either.

In order to solve this problem, WO 02/078431 proposes enabling a "visual inspection" of the contents of the sample container if the latter is closed off by the stopper. With this known system, the stopper has a receiving cavity surrounded by a cutting edge on its front side. The sample container is designed to be at least partially transparent in order to carry out the visual inspection, preferably near the top of the stopper in the closed state of the sample container. In particular, it is proposed to construct the sample container from transparent plastic and to partially coat the latter with a layer of paint, with a readable identification code being applied on the painted part. It is mentioned that this code would be difficult to read if there were no paint coat.

This known system has turned out to be unsatisfactory in practice. In particular, it has emerged that it is possible with the known sample container, that visually the impression is given that a usable sample has been taken, whereas this is found not to be the case during subsequent analysis. Furthermore, the known system is not attractive in terms of production engineering, in particular regarding the application of the paint coat.

It is an object of the present invention to provide an improved system in order to solve one or more of the abovementioned drawbacks.

The invention provides a system according to the preamble of claim 1, which is characterized in that the stopper is at least partially transparent, such that the introduction of a sample into the sample container can be checked visually.

This measure makes it possible to check the contents of the sample container via the stopper. This is advantageous as the sample is just on the top of the stopper, optionally in a receiving cavity provided for this purpose in the top of the stopper. The check can therefore be carried out from an optimum direction.

Preferably, only the stopper is designed to be transparent and the body of the sample container is completely non-transparent and preferably produced by injection-moulding from a non-transparent plastic material. This is particularly advantageous if a readable identification is applied to the exterior of the sample container.

The invention also relates to a stopper with a transparent part for sealing a sample container of a system of this type. Such stoppers are sometimes supplied premounted on the pin, but likewise as a separate component which is placed on the pin shortly before the tag is attached.

Further advantageous embodiments are described in the subclaims and in the following description with reference to the drawing, in which:
Fig. 1 shows, in combination with the sample container and the stopper, a first ear tag part provided with an integral pin and a second ear tag part to which the sample container is releasably attached;
Fig. 2 shows a sample container and the associated stopper of the system according to the invention;
Fig. 3 shows the release of the closed sample container from the ear tag attached to the ear (not shown);
Fig. 4 shows the sealed sample container in section;
Fig. 5 shows an alternative sample container provided with a stopper having a lens, which is surrounded by a break-away edge; and
Fig. 6 shows another alternative stopper with sample container.

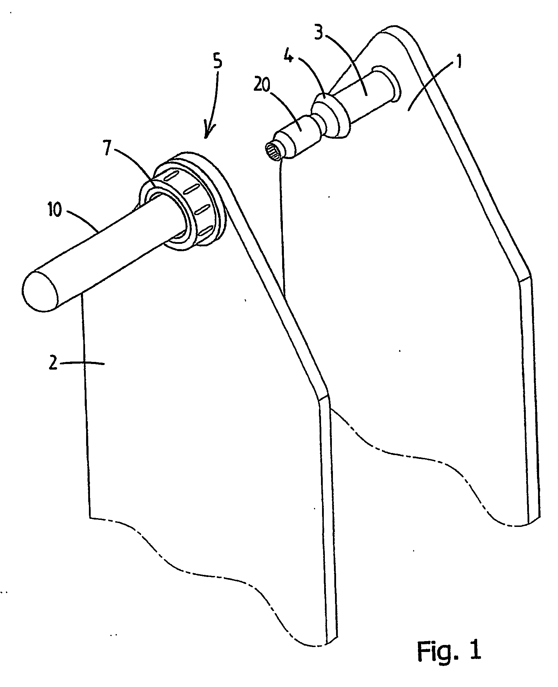

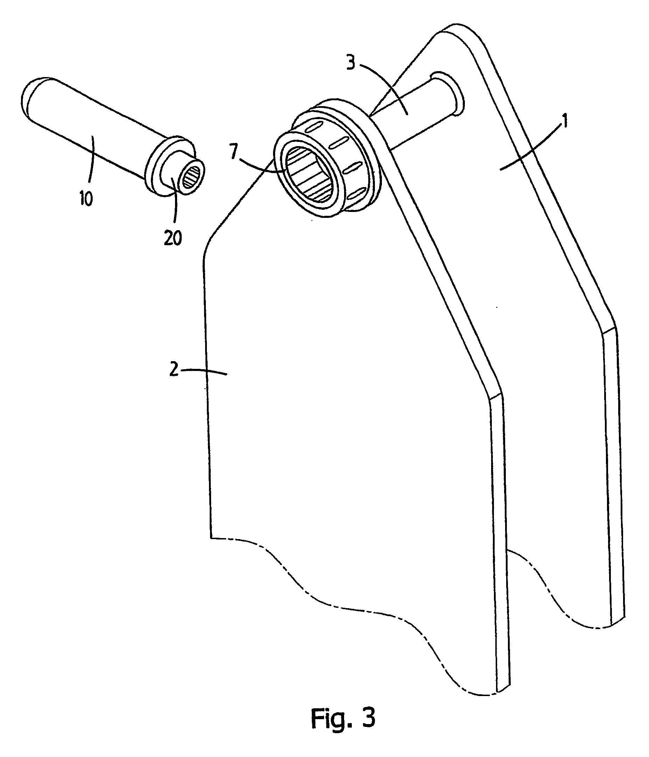

Below, an exemplary embodiment of the system for marking a biological object, in particular for ear-marking an animal, and for taking a sample of the biological object according to the invention will be described with reference to Figures 1-4. In this context, it is pointed out that those skilled in the art can take possible embodiments and information regarding the method of operation from WO 02/39810, the contents of which are deemed to be incorporated in this application by way of reference.

The system illustrated comprises a first tag part 1, a second tag part 2 and a pin 3. The pin 3 has a first end and a second end, the pin 3 being connected to the first tag part 1 by its first end. The pin is provided with a head 4 at its second end.

The second tag part 2 is provided with a receiving opening 5 for the head 4 of the pin 3, such that the pin 3 can be pressed through a part of the biological object, in particular through the ear of an animal, and subsequently through the receiving opening 5 of the second tag part 2, as a result of which the first and second tag parts 1, 2 are attached to one another and to the biological object via the pin 3.

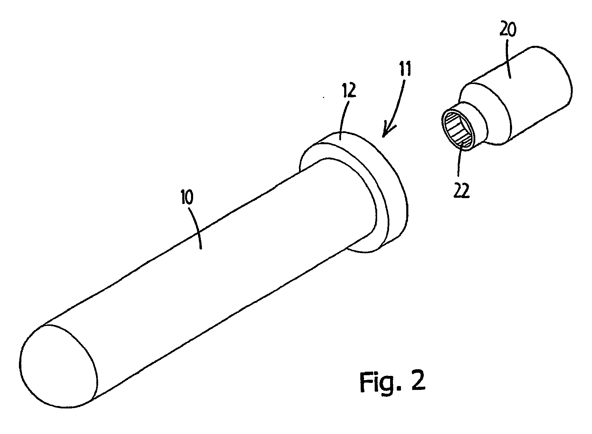

The system furthermore comprises a sample container 10 with an opening 11 (see Fig. 2) for introducing a sample of biological material of the object into the sample container 10, which sample container 10 is attached to the second tag part 2 (see Fig. 1) via a releasable connection, in such a manner that the opening 11 of the sample container 10 and the receiving opening 5 of the second tag part 2 lie in line.

In the embodiment shown, a flange edge 12 of the sample container 10 is releasably held in a raised annular wall 7 of the second tag part 2.

The system furthermore comprises a stopper 20 for sealing the opening 11 after the sample has been introduced into the sample container 10.

While the pin 3 is being pushed through the object, the stopper 20 is on the head 4 of the pin 3, in such a manner that a sample of the biological object is taken while the pin is being pushed through the biological object and said sample is introduced into the sample container 10, following which the opening 11 of the sample container 10 is directly sealed by the stopper 20. At the same time, the stopper 20 may detach from the head 4 of the pin 3.

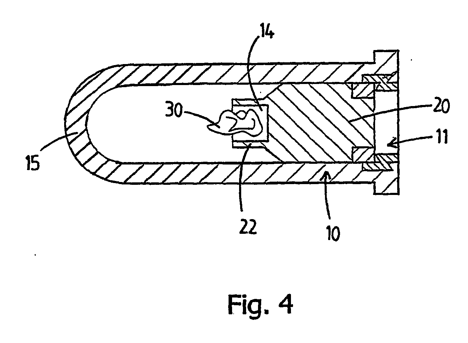

In the embodiment shown, the stopper 20 has a protruding annular wall 21 at its front, which delimits a cavity 22 which is open at the front and in which sample material 30 will land (see Fig. 4).

In the embodiment illustrated in the drawing, the sample container 10 comprises a body, for example produced by injection-moulding a suitable plastic, with a peripheral wall 14 and the opening 11 at one axial end and an integrally formed bottom 15 at the opposite axial end.

The body of the sample container 10 is non-transparent, for example made from POM or polyamide.

The stopper 20 is transparent in order that the introduction of a sample 30 into the sample container 10 can be checked visually. The stopper is, for example, made from PC (polycarbonate), PS (polystyrene), PMMA.

In one embodiment which is not shown and is known per se, the opening 11 of the sample container 10 is initially sealed by a releasable seal, for example by a pierceable diaphragm, for example a plastic sheet. Such a releasable seal could be provided on the sample container, but possibly also on the second ear tag part. A releasable seal of this type may serve to initially protect the sample container from the environment and thereby prevent contamination. Another reason may be that one or more substances are accommodated in the sample container, for example a substance which is intended for processing the sample further and/or for preserving the sample. Such a substance, for example a preservative, could also be provided in the stopper.

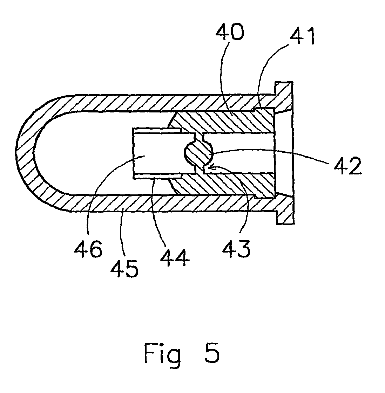

Below, a sample container with an alternative stopper will be explained with reference to Figure 5.

In this example, the stopper 40 shown is largely or, if desired, completely made of a transparent plastic material. The stopper 40 has a stop edge 41, with which the stopper 40 bears against the body of the sample container 45 in the filled and closed state of the sample container 45. In this example, the interaction between the stop edge 41 and the sample container 45 prevents the stopper 40 from being pushed in any further.

Furthermore, the stopper 40 has a transparent section 42 which is designed as a lens, in this example a lens 42 which magnifies when looking from the outside in.

The lens 42 is in this case also a bottom of a space 46 which is surrounded by the cutting ring 44 on the head of the stopper 40. The lens 42 affords a better view of the contents of the sample container than if that section 42 were a transparent part of substantially uniform thickness.

It should be noted that the cutting ring 44 may, if desired, be made of a suitable metal, which improves the cutting action.

Using the lens 42, it is easy to check, for example using the naked eye, whether any ear material has landed in the sample container 45, immediately after the ear tag is fitted. After all, if this were not the case and checking would not be easy, it would only be discovered at a late stage that no sample had been taken. This is particularly problematic if an animal has already been slaughtered, as then no new samples can be taken.

It can furthermore be seen from Fig. 5 that a break-away edge 43 extends around the lens 42, as a result of which the lens 42 in this case also forms a part of the stopper 40 which can be broken away. When a considerable pressure force is exerted on the lens 42, for example using a suitable tool, the lens 42 breaks away from the rest of the stopper 40. This makes it possible to push the lens 42 inwards when the sample is being analyzed and thus to gain access to the collected sample.

The non-transparent body of the sample container 10, 45 may be provided with a readable identification on its exterior, for example a 2D bar code.

The stopper could be made from two elements, so that it has a body with an element made of non-transparent material and an element made of transparent material.

In a variant (not shown), the bottom 15 of the sample container 10 is transparent and the peripheral wall is non-transparent, so that it is possible to check whether a sample is present by means of a beam through the opposite bottom 15 and stopper 20. This could for example be advantageous, if an automatic inspection of the sample container is carried out, during which a suitable light beam is passed through the bottom and the stopper. Also, said transparent bottom 15 could be designed to be a lens.

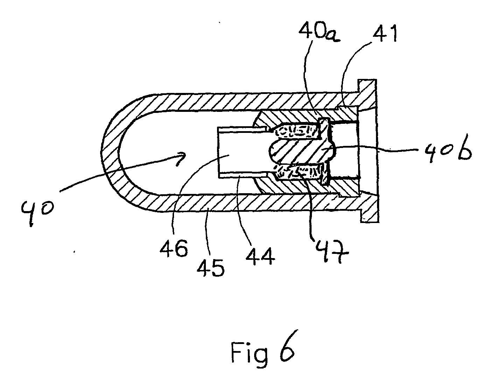

Figure 6 shows a variant of the stopper 40, in which the stopper 40 has a substantially tubular part 40a, in this example having a metal cutting ring 44 at the front end, and a transparent part 40b in the bore of the part 40a, which transparent part 40b is fixed therein.

In this example, a chamber 47 is present in the stopper 40, in this case an annular chamber 47 bounded by the parts 40a and 40b, in which a preserving substance or other substance(s) is (are) contained which aids in preserving and/or further processing the sample to be taken. This chamber 47 is in communication with the cavity 46 for the sample to be taken. It will be clear that the presence of a substance of this type in the chamber 47 has no adverse effects with respect to checking the sample.

The annular chamber 47, containing the transparent part of the stopper which offers a view of the cavity 46, can also be implemented with other embodiments of the stopper.

## Claims

1. System for marking a biological object and taking a sample of the biological object, which object is in particular an animal, comprising:
- a first tag part (1),
- a second tag part (2)
- a pin (3), having a first end and a second end, which pin is connected to the first tag part by its first end and which pin is provided with a head (4) at its second end,
- in which the second tag part is provided with a receiving opening (5) for the head (4) of the pin, such that the pin can be pressed through a part of the biological object, in particular through the ear of an animal, and subsequently through the receiving opening of the second tag part (2), as a result of which the first and second tag parts are attached to one another and to the biological object via the pin,
which system furthermore comprises:
a sample container (10) with an opening (11) for introducing a sample of biological material of the object into the sample container, which sample container (10) is attached to the second tag part (2) via a releasable connection, in such a manner that the opening (11) of the sample container and the receiving opening (5) of the second tag part lie in line,
a stopper (20;40) for sealing the opening (11) after the sample has been introduced into the sample container (10;45), which stopper (20;40) is on the head (4) of the pin (3) when the tag parts are being fitted to the biological object, in such a manner that a sample of the biological object is taken while the pin is being pushed through the biological object and said sample is introduced into the sample container, following which the opening (11) of the sample container is sealed by the stopper (20),
in which it is possible to check visually whether a sample has been introduced into the sample container after the sample container has been closed,
**characterized in that** the stopper (20;40) is at least partially transparent, such that the introduction of a sample into the sample container (10;45) can be checked visually via the transparent stopper.

2. System according to claim 1, in which the body of the sample container is non-transparent and the stopper (20;40) is at least partially transparent.

3. System according to claim 2, in which the sample container (10;45) has a body with a peripheral wall (14) and the opening (11) for the stopper at one axial end and a bottom (15) at the opposite axial end, in which the body is non-transparent and the stopper (20;40) is at least partially transparent.

4. System according to claim 1, in which the sample container has a body with a peripheral wall and the opening for the stopper at one axial end and a bottom at the opposite axial end, in which the peripheral wall is non-transparent and the bottom of the sample container is transparent.

5. System according to one or more of the preceding claims, in which the stopper has a body with an element made of a non-transparent material and an element made of transparent material.

6. System according to one or more of the preceding claims, in which a transparent part of the stopper (40) is designed as a lens (42), preferably a magnifying lens (42).

7. System according to one or more of the preceding claims, in which a transparent part of the stopper (40) has a break-away part (42) which is bounded by a break-away edge (43), which breaks away from the rest of the stopper when a considerable pressure force is exerted on that break-away part, for example using a suitable tool.

8. System according to one or more of the preceding claims, in which the stopper has a cavity (14;46) surrounded by a cutting ring (22;44) at its front end, for example a metal cutting ring (44), for receiving the sample (30).

9. System according to claims 6 and 8, in which the lens (42) forms the bottom of the cavity (46) for receiving the sample.

10. System according to claim 8 or 9, in which the cutting ring (44) is made of metal.

11. Stopper for a system according to one or more of the preceding claims, which stopper is at least partially transparent.

12. Method for marking a biological object and taking a sample of the biological object, in which use is made of a system according to one or more of the preceding claims, and in which the introduction of the sample into the sample container is checked via the transparent stopper.

13. Method for manipulating, for example removing and/or analyzing, a sample accommodated in the sample container of the system according to claim 7, in which a considerable pressure is exerted on the break-away part using a suitable tool, so that this part breaks away.

## Patentansprüche

1. System zum Markieren eines biologischen Objekts und zur Entnahme einer Probe des biologischen Objekts, wobei das Objekt insbesondere ein Tier ist, wobei das System Folgendes aufweist:
- einen ersten Markierungsteil (1),
- einen zweiten Markierungsteil (2),
- einen Stift (3) mit einem ersten und einem zweiten Ende, wobei der Stift mit seinem ersten Ende mit dem ersten Markierungsteil verbunden ist und wobei der Stift an seinem zweiten Ende mit einem Kopf (4) ausgestattet ist,
- wobei der zweite Markierungsteil mit einer Aufnahmeöffnung (5) für den Kopf (4) des Stifts (3) derart ausgestattet ist, dass der Stift (3) durch einen Teil des biologischen Objekts hindurchgedrückt werden kann, insbesondere durch das Ohr eines Tieres, und dass er nachfolgend durch die Aufnahmeöffnung des zweiten Markierungsteils (2) gedrückt wird, wodurch der erste und der zweite Markierungsteil miteinander und mit dem biologischen Objekt über den Stift verbunden werden, wobei das System ferner Folgendes aufweist:
ein Probenbehältnis (10) mit einer Öffnung (11) zum Einführen einer Probe eines biologischen Materials des Objektes in das Probenbehältnis, wobei das Probenbehältnis (10) über eine lösbare Verbindung an dem zweiten Markierungsteil (2) angebracht ist, und zwar derart, dass die Öffnung (11) des Probenbehältnisses und die Aufnahmeöffnung (5) des zweiten Markierungsteils in Linie zueinander liegen,
ein Stoppelement (20; 40) zum Verschließen der Öffnung (11), nachdem die Probe in das Probenbehältnis (10; 45) eingeführt worden ist, wobei das Stoppelement (20; 40) am Kopf (4) des Stifts (3) liegt, wenn die Markierungsteile an das biologische Objekt derart angepresst werden, dass eine Probe des biologischen Objekts entnommen wird, während der Stift durch das biologische Objekt hindurchgedrückt wird und die Probe in den Probencontainer eingeführt wird, wonach die Öffnung (11) des Probenbehältnisses durch das Stoppelement (20) verschlossen wird,
wobei es bei dem System möglich ist, visuell zu überprüfen, ob eine Probe in das Probenbehältnis eingeführt wurde, nachdem der Probencontainer geschlossen wurde,
**dadurch gekennzeichnet, dass** das Stoppelement (20; 40) zumindest teilweise transparent ist, so dass die Einführung einer Probe in das Probenbehältnis (10; 45) über das transparente Stoppelement visuell überprüft werden kann.

2. System nach Anspruch 1, bei welchem der Körper des Probenbehältnisses nicht transparent und das Stoppelement (20; 40) zumindest teilweise transparent ist.

3. System nach Anspruch 2, bei welchem das Probenbehältnis (10; 45) einen Körper mit einer peripheren Wand (14) besitzt, und die Öffnung (11) für das Stoppelement an einem axialen Ende und einen Boden (15) an dem entgegengesetzten axialen Ende vorliegen hat, wobei der Körper nicht transparent ist und das Stoppelement (20; 40) zumindest teilweise transparent ist.

4. System nach Anspruch 1, bei welchem das Probenbehältnis einen Körper mit einer peripheren Wand besitzt, und die Öffnung für das Stoppelement an einem axialen Ende und einen Boden an dem entgegengesetzten axialen Ende vorliegen hat, bei welchem die periphere Wand nicht transparent und der Boden des Probenbehältnisses transparent ist.

5. System nach einem oder mehreren der vorstehenden Ansprüche, bei welchem das Stoppelement einen Körper mit einem Element aus einem nicht transparenten Material sowie einem Element aus transparentem Material besitzt.

6. System nach einem oder mehreren der vorstehenden Ansprüche, in welchem ein transparenter Teil des Stoppelements (40) als eine Linse (42), vorzugsweise als Vergrößerungslinse (42), ausgebildet ist.

7. System nach einem oder mehreren der vorstehenden Ansprüche, bei welchem ein transparenter Teil des Stoppelements (40) einen abzubrechenden Abschnitt (42) aufweist, der über eine Abbrechkante (43) verbunden ist, welche vom Rest des Stoppelements abbricht, wenn eine empfindliche Druckkraft auf den abzubrechenden Abschnitt ausgeübt wird, beispielsweise unter Verwendung eines geeigneten Werkzeugs.

8. System nach einem oder mehreren der vorstehenden Ansprüche, bei welchem das Stoppelement einen Hohlraum (14; 46) besitzt, der von einem Schneidering (22; 44) an seinem Vorderende umgeben ist, beispielsweise einem Schneidering (44) aus Metall, zur Aufnahme der Probe (30).

9. System nach Anspruch 6 und 8, bei welchem die Linse (42) den Boden des Hohlraumes (46) zur Aufnahme der Probe bildet.

10. System nach Anspruch 8 oder 9, bei welchem der Schneidering (44) aus Metall ist.

11. Stoppelement für ein System nach einem oder mehreren der vorstehenden Ansprüche, wobei das Stoppelement zumindest teilweise transparent ist.

12. Verfahren zur Markierung eines biologischen Objekts und zur Entnahme einer Probe des biologischen Objekts, bei welchem ein System gemäß einem oder mehrerer der vorstehenden Ansprüche eingesetzt wird, und bei welchem die Einführung der Probe in das Probenbehältnis über das transparente Stoppelement überprüft wird.

13. Verfahren zum Bearbeiten, beispielsweise zum Entfernen und/oder Analysieren, einer Probe, die in dem Probenbehältnis des Systems nach Anspruch 7 vorliegt, bei welchem unter Verwendung eines geeigneten Werkzeugs ein empfindlicher Druck auf den abzubrechenden Abschnitt ausgeübt wird, so dass dieser Teil wegbricht.

## Revendications

1. Système pour marquer un objet biologique et prélever un échantillon de l'objet biologique, lequel objet est en particulier un animal, comprenant :
- une première partie d'étiquette (1),
- une deuxième partie d'étiquette (2)
- une fiche (3), ayant une première extrémité et une deuxième extrémité, laquelle fiche est raccordée à la première partie d'étiquette par sa première extrémité et laquelle fiche est munie d'une tête (4) à sa deuxième extrémité,
- dans lequel la deuxième partie d'étiquette est munie d'un orifice de réception (5) pour la tête (4) de la fiche, tel que la fiche peut être pressée à travers une partie de l'objet biologique, en particulier à travers l'oreille d'un animal, et par la suite à travers l'orifice de réception de la deuxième partie d'étiquette (2), en résultat de quoi les première et deuxième parties d'étiquette sont attachées l'une à l'autre et à l'objet biologique via la fiche,
système qui comprend en outre :
un récipient pour échantillon (10) avec un orifice (11) pour l'introduction d'un échantillon de matériel biologique de l'objet dans le récipient pour échantillon, lequel récipient pour échantillon (10) est attaché à la deuxième partie d'étiquette (2) via un raccordement amovible, d'une manière telle que l'orifice (11) du récipient pour échantillon et l'orifice de réception (5) de la deuxième partie d'étiquette se trouvent en ligne,
un bouchon (20 ; 40) pour boucher l'orifice (11) après que l'échantillon ait été introduit dans le récipient pour échantillon (10 ; 45), lequel bouchon (20 ; 40) est sur la tête (4) de la fiche (3) lorsque les parties d'étiquette sont montées sur l'objet biologique, de telle manière qu'un échantillon de l'objet biologique est prélevé tandis que la fiche est poussée à travers l'objet biologique et ledit échantillon est introduit dans le récipient pour échantillon, après quoi l'orifice (11) du récipient pour échantillon est bouché par le bouchon (20),
dans lequel il est possible de vérifier visuellement si un échantillon a été introduit dans le récipient pour échantillon après que le récipient pour échantillon ait été fermé,
**caractérisé en ce que** le bouchon (20 ; 40) est au moins partiellement transparent, de sorte que l'introduction d'un échantillon dans le récipient pour échantillon (10 ; 45) peut être vérifiée visuellement via le bouchon transparent.

2. Système selon la revendication 1, dans lequel le corps du récipient pour échantillon est non transparent et le bouchon (20 ; 40) est au moins partiellement transparent.

3. Système selon la revendication 2, dans lequel le récipient pour échantillon (10 ; 45) possède un corps avec une paroi périphérique (14) et l'orifice (11) pour le bouchon à une extrémité axiale et un fond (15) à l'extrémité axiale opposée, dans lequel le corps est non transparent et le bouchon (20 ; 40) est au moins partiellement transparent.

4. Système selon la revendication 1, dans lequel le récipient pour échantillon possède un corps avec une paroi périphérique et l'orifice pour le bouchon à une extrémité axiale et un fond à l'extrémité axiale opposée, dans lequel la paroi périphérique est non transparente et le fond du récipient pour échantillon est transparent.

5. Système selon une ou plusieurs des revendications précédentes, dans lequel le bouchon possède un corps avec un élément fait d'une matière non transparente et un élément fait d'une matière transparente.

6. Système selon une ou plusieurs des revendications précédentes, dans lequel une partie transparente du bouchon (40) est conçue sous forme d'une lentille (42), de préférence une lentille grossissante (42).

7. Système selon une ou plusieurs des revendications précédentes, dans lequel une partie transparente du bouchon (40) possède une partie détachable (42) qui est liée par un bord détachable (43), qui se détache du reste du bouchon lorsqu'une force de pression considérable est exercée sur cette partie détachable, par exemple en utilisant un outil approprié.

8. Système selon une ou plusieurs des revendications précédentes, dans lequel le bouchon possède une cavité (14 ; 46) entourée d'un anneau de découpe (22 ; 44) à son extrémité avant, par exemple un anneau de découpe métallique (44), pour recevoir l'échantillon (30).

9. Système selon les revendications 6 et 8, dans lequel la lentille (42) forme le fond de la cavité (46) pour recevoir l'échantillon.

10. Système selon la revendication 8 ou 9, dans lequel l'anneau de découpe (44) est réalisé en métal.

11. Bouchon pour un système selon une ou plusieurs des revendications précédentes, lequel bouchon est au moins partiellement transparent.

12. Procédé pour marquer un objet biologique et prélever un échantillon de l'objet biologique, dans lequel il est fait usage d'un système selon une ou plusieurs des revendications précédentes, et dans lequel l'introduction de l'échantillon dans le récipient pour échantillon est vérifiée via le bouchon transparent.

13. Procédé pour manipuler, par exemple retirer et/ou analyser, un échantillon logé dans le récipient pour échantillon du système selon la revendication 7, dans lequel une pression considérable est exercée sur la partie détachable en utilisant un outil approprié, de sorte que cette partie se détache.
